# FASCICULE DE BREVET EUROPEEN

(11) **EP 0 397 817 B1**
(45) Date de publication et mention de la délivrance du brevet: **26.05.1993**
(21) Numéro de dépôt: 89911755.0
(22) Date de dépôt: 01.11.1989
(51) Int. Cl.: B60B 11/08, B62D 49/06

(54) **STRUCTURE A ROUES INDEPENDANTES MULTIPLES POUR VEHICULE MOTORISE OU TRACTE**
KRAFT- ODER SCHLEPPFAHRZEUG MIT UNABHÄNGIGEN DOPPELRÄDERN
STRUCTURE WITH MULTIPLE INDEPENDENT WHEELS FOR CYCLE OR ENGINE-DRIVEN VEHICLE

(30) Priorité: 02.11.1988 FR 8814528
(43) Date de publication de la demande: 22.11.1990
(73) Titulaire: SBL Société Brevets Licences S.A., CH-1217 MEYRIN/GE (CH)
(72) Inventeur: SBARRO,Franco, CH-1422 Les TUILERIES DE GRANDSON (CH)
(74) Mandataire: Nithardt, Roland
(86) Numéro de dépôt international: CH8900192
(87) Numéro de publication internationale: WO9005069

(56) Documents cités:
- FR-A- 771 427
- FR-A- 773 830
- FR-A- 841 841
- FR-A- 2 526 746
- SU-A- 765 034
- US-A- 1 406 122
- US-A- 1 426 587
- US-A- 1 887 544

## Description

La présente invention concerne une structure à roues indépendantes multiples pour véhicule motorisé ou tracté destiné à se déplacer sur une surface d'appui irrégulière.

De nombreux véhicules utilitaires ou routiers ou des véhicules spéciaux de chantiers comportent des roues jumelées qui présentent plusieurs avantages par rapport aux roues simples. Tout d'abord, le risque d'accidents en cas de crevaison est fortement réduit du fait que les roues d'une paire de roues jumelées ne sont en général pas sujettes simultanément à une crevaison. Ensuite, le coût de deux pneumatiques standards de largeur réduite est moins élevé pour l'utilisateur que celui d'un pneumatique unique de largeur double. Ces avantages sont bien connus et exploités par les constructeurs. Ils sont toutefois en partie ternis par les inconvénients essentiellement dus au fait que, dans toutes les constructions connues, les roues jumelées sont solidaires l'une de l'autre soit parce que leurs jantes sont couplées, soit parce qu'elles sont montées sur un même axe rigide. En effet, lorsque l'une des roues est soulevée en raison de l'existence d'une bosse dans le revêtement routier, la roue jumelle est automatiquement soulevée étant donné qu'elle est liée à la première, même si la bosse ne s'étend pas sous cette dernière. Il en résulte une perte momentanée d'adhérence simultanée des deux roues jumelées. Ce phénomène se répète de façon permanente sur un revêtement routier ce qui entraîne une diminution de la tenue de route due à ces pertes d'adhérence répétitives provoquant un sautillement constant des roues.

Il existe des systèmes permettant de jumeler des roues, tels que ceux décrits notamment par les brevets US-A-1,887,544 et FR-A-771427. Ces roues jumelées comportent une série de bascules qui sont réparties tout autour de la périphérie du moyeu. Etant donné que les jantes portant les pneumatiques sont entraînées en rotation et portent les rotules d'extrémité desdites bascules, le nombre de ces bascules doit être le plus élevé possible pour que le but puisse être atteint : à savoir le déplacement vertical indépendant des deux roues jumelées en fonction du relief de la route. Comme les rotules doivent, pour bouger dans toutes les directions, être très robustes, chaque rotule d'une paire de rotules diamétralement opposées doit être parfaitement positionnée pour éviter des contraintes excessives qui provoquent une usure prématurée.

Une telle construction est irréalisable en pratique et même si techniquement elle était réalisable sur des véhicules de série, les coûts occasionnés et l'alourdissement des roues du véhicule rendraient cette solution tout à fait inacceptable d'un point de vue économique.

Les constructions actuelles ne permettent pas d'apporter une solution à ce problème.

La présente invention se propose de pallier ces inconvénients en réalisant une structure de roues indépendantes multiples telle que définie ci-dessus, qui permet d'assurer un contact optimum des pneumatiques avec la surface d'appui, quelles que soient les conditions d'utilisation du véhicule ou la forme et la nature de ladite surface d'appui.

Ce but est atteint par la structure selon l'invention caractérisée en ce que chaque roue comporte une partie centrale liée à la structure de base du véhicule et une partie périphérique concentrique par rapport à ladite partie centrale et agencée pour tourner autour de cette dernière, dans laquelle ladite partie centrale et ladite partie périphérique sont couplées entre elles par au moins un roulement comprenant au moins un élément annulaire intérieur solidaire de ladite partie centrale et au moins un élément annulaire extérieur concentrique audit élément annulaire intérieur et solidaire de ladite partie périphérique, cette dernière portant un pneumatique adapté à la nature de la surface d'appui sur laquelle se déplace le véhicule, et dans laquelle ladite partie centrale est liée à la structure de base du véhicule en des points d'ancrage décentrés de la roue, ces roues indépendantes étant reliées deux à deux par deux bascules diamétralement opposées, ces bascules étant articulées à une de leurs extrémités en un point d'ancrage décentré d'une des roues indépendantes et à leur autre extrémité en un point d'ancrage décentré d'une autre de ces roues indépendantes, et les dites bascules étant fixées au moyen d'organes de pivotement, soit directement, soit par l'intermédiaire de bascules à deux bras de couplage solidaires de la structure de base du véhicule. Lesdits bras de couplage constituent avantageusement des bras de suspension du véhicule.

De préférence, lesdits organes de pivotement sont équidistants desdits points d'ancrage décentrés des roues indépendantes et sont avantageusement décalés par rapport au milieu de la bascule.

Selon une autre forme de réalisation, les éléments annulaires extérieurs des roulements des roues jumelées sont couplés entre eux au moyen d'une biellette dont les extrémités sont respectivement articulées audit l'élément annulaire extérieur associé à l'une des roues et audit élément annulaire extérieur associé à l'autre roue.

D'une façon avantageuse, l'élément annulaire extérieur associé à l'une des roues indépendantes peut être couplé à un mécanisme d'entraînement au moyen de trois biellettes fixées par une de leurs extrémités en trois points dudit élément annulaire extérieur.

La présente invention sera mieux comprise en référence à la description d'un exemple de réalisation et du dessin annexé dans lequel :
la fig. 1 représente une vue en perspective illustrant un mode de réalisation préféré de la structure à roue indépendante selon l'invention, ces roues étant non entraînées,
la fig. 2 représente une vue en perspective similaire à celle de la fig. 1, correspondant à des roues entraînées,
la fig. 3 représente une structure de roues selon l'invention, vue schématiquement de dessus et correspondant à des roues non directrices,
la fig. 4 représente une vue frontale de la structure représentée par la fig. 3,
la fig. 5 représente une vue en élévation de cette même structure correspondant aux fig. 3 et 4,
la fig. 6 est une vue similaire à celle de la fig. 3 mais correspondant à des roues directrices,
la fig. 7 représente schématiquement une structure à trois roues couplées, et
la fig. 8 représente une vue schématique d'une structure comportant quatre roues indépendantes couplées entre elles.

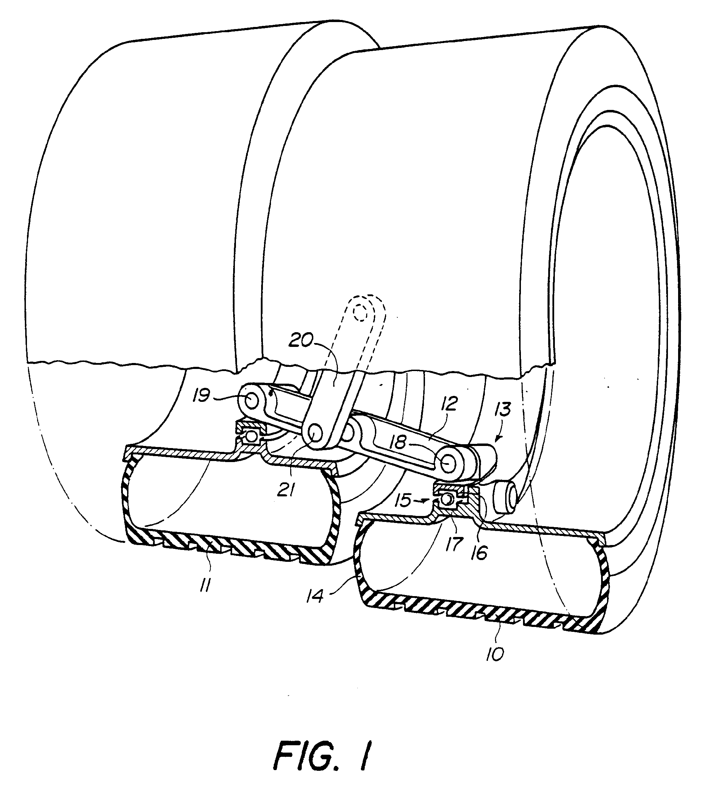

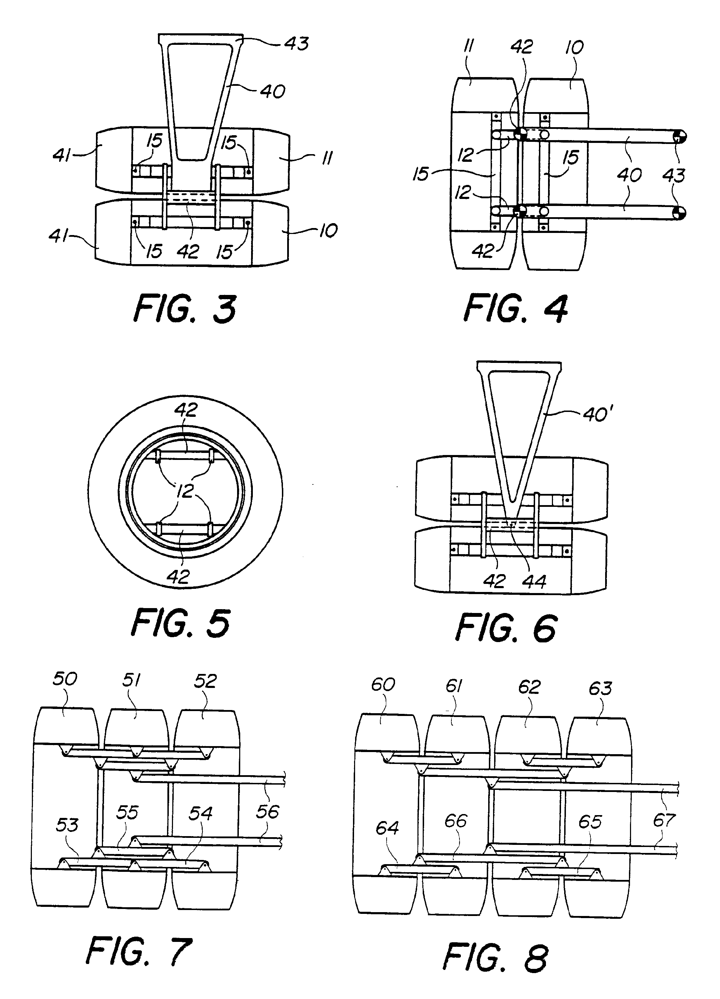

En référence à la fig. 1, la structure à roues indépendantes représentée correspond à deux roues jumelées 10 et 11 qui sont reliées entre elles par deux bascules 12 (dont une seule est visible sur cette figure) qui sont diamétralement opposées, ou de préférence par deux paires de bascules comme le montrent plus particulièrement les fig. 3 à 6. Chacune des deux roues 10 et 11 comporte une partie centrale 13 et une partie périphérique 14 concentrique à la partie centrale 13, ces deux parties étant couplées entre elles par un roulement 15 en forme de couronne. Ce roulement 15 comporte un élément annulaire intérieur 16 qui constitue l'un des composants de la partie centrale 13 et un élément annulaire extérieur 17 qui constitue l'un des composants de la partie périphérique 14.

Les bascules 12 relient en fait les deux parties centrales respectives 13 des deux roues 10 et 11 par l'intermédiaire de deux articulations 18 et 19. Un bras 20 est articulé à une de ses extrémités au moyen d'un organe de pivotement 21 à l'une des deux bascules et à son autre extrémité soit au moyen d'un organe correspondant de l'autre bascule 12, soit directement à un axe ou à un bras de suspension solidaire du châssis du véhicule. Dans la pratique, chaque bascule 12 correspond à un bras 20 qui est monté de préférence rigidement à un axe porteur de la structure de roues, fixé au châssis du véhicule. Cette liaison sera décrite plus en détail en référence aux fig. 3 à 6.

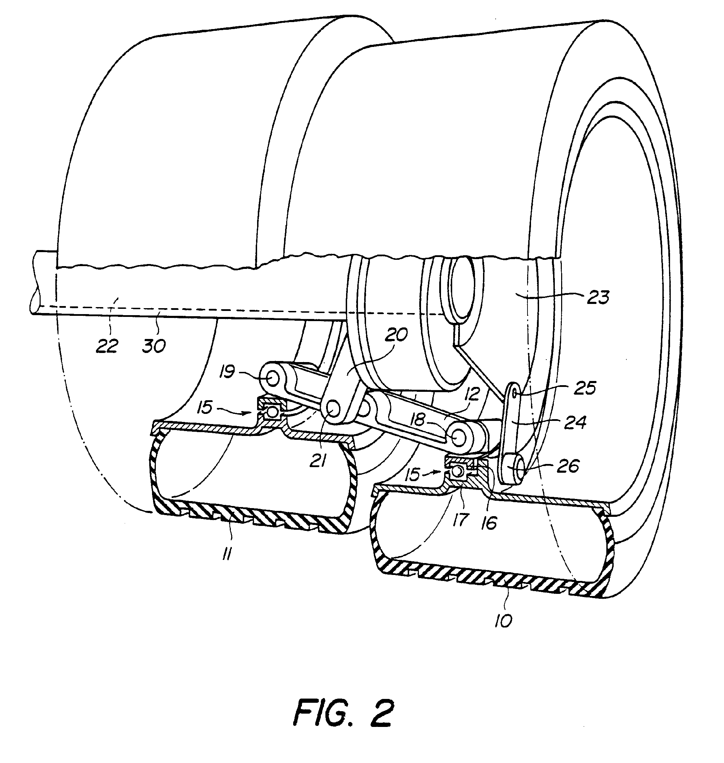

La fig. 2 illustre une variante de la structure de roues représentée par la fig. 1, dans laquelle la roue 10 extérieure est une roue motrice. Comme précédemment, cette structure comporte deux bascules 12 diamétralement opposées qui sont respectivement reliées par les articulations 18, et 19 aux éléments annulaires intérieurs 16 des roulements 15 de chacune de ces roues. Les deux bascules 12 diamétralement opposées sont respectivement reliées par deux bras 20, articulés au moyen d'organes de pivotement 21, à des éléments de suspension 30 qui peuvent être associés à un arbre d'entraînement 22 destiné à entraîner un moyeu ou un disque 23 conçu pour transmettre le couple de rotation à la roue d'entraînement 10. Ce couple de rotation est avantageusement transmis par un flasque 23 auquel est fixée une biellette 24 articulée à une de ses extrémités en un point 25, et à son autre extrémité en un point 26 disposé le long de l'élément annulaire extérieur 17 du roulement 15 de la roue 10.

Cette forme de réalisation est donnée à titre d'exemple et illustre en particulier le mode d'entraînement de la roue extérieure de la structure de roues 10-11 au moyen d'une biellette unique qui relie une pièce quelconque, qui peut être un disque ou un moyeu solidaire d'un arbre d'entraînement, à la jante de la roue qui est elle-même solidaire de l'élément annulaire extérieur du roulement de cette roue.

Dans les deux formes de réalisation décrites en référence aux fig. 1 et 2, le couplage des roues s'effectue au moyen de deux bascules diamétralement opposées. Cette forme de réalisation nécessite une construction particulièrement robuste des bascules et des points d'articulation, ce qui peut constituer un handicap lorsqu'on souhaite réaliser une construction légère, en particulier pour l'utiliser en compétition.

La réalisation représentée par les fig. 3, 4 et 5 répond à ces exigences. La structure représentée comporte, comme précédemment, deux roues jumelées 10 et 11 dont chacune comporte une partie centrale fixe reliée à un bras de suspension 40, et une partie périphérique rotative et concentrique par rapport à la partie centrale, ces deux parties étant reliées entre elles par un roulement en forme de couronne. Ces roulements 15 assurent la liaison entre la partie centrale de la roue qui est fixe et la partie périphérique rotative qui comporte la jante et un pneumatique 41 monté sur cette jante. Les parties intérieures fixes des deux roues 10 et 11 sont couplées entre elles par quatre bascules 12, diamétralement opposées deux à deux, qui sont reliées deux à deux par une barre de couplage rigide 42.

Le principe de fonctionnement de ces quatre bascules est en tous points identique à celui des deux bascules des structures représentées par les fig. 1 et 2. Le dédoublement de la bascule inférieure et de la bascule supérieure permet de réaliser une construction beaucoup plus rigide et plus efficace au moyen d'éléments moins robustes et moins lourds. Les deux barres de liaison 42 permettent de fixer la structure de roues jumelées à deux bras de suspension 40 qui sont articulés en deux points 43 du châssis du véhicule.

Dans le cas d'une structure à roues non directrices, les bras de suspension 40 sont fixés aux barres de liaison 42 sensiblement sur toute la longueur de ces dernières ou en au moins deux points de préférence aussi écartés que possible l'un de l'autre. Dans le cas d'une structure à roues directrices telle que représentée par la fig. 6, les bras de suspension 40' sont couplés aux barres de liaison 42 en un point 44 qui définit un axe de pivotement de ces roues par rapport à ces bras de suspension. Tous les autres éléments représentés par cette figure sont strictement identiques aux éléments correspondants de la fig. 3 et ne seront donc pas décrits plus en détail ci-dessous.

Au vu de la description ci-dessus des figures correspondantes, on conçoit aisément que la structure à roues jumelées selon l'invention assure une indépendance quasi totale des deux roues couplées entre elles. De ce fait, si l'une des roues est soulevée en raison d'une inégalité du revêtement routier, l'autre roue continue sa trajectoire indépendamment de la première. Non seulement cette dernière roue reste en contact avec le revêtement mais l'adhérence du pneumatique de la roue qui reste en contact avec le revêtement est amélioré du fait que la première roue, qui décolle du revêtement, engendre momentanément un supplément de poids non porté qui accentue la pression du pneumatique de la seconde roue sur la surface portante. D'une manière générale, les points de liaison des différentes bascules avec les éléments de suspension sont localisés sensiblement au milieu de ces bascules. Toutefois, pour obtenir des effets particuliers et notamment pour privilégier l'une des roues jumelées par rapport à l'autre, on peut déplacer ce point d'articulation de part et d'autre du milieu des bascules 12. Lorsqu'une proportion supérieure à 50% du poids du véhicule doit reposer sur les roues extérieures, le point d'articulation sera déporté vers l'extérieur. Dans le cas contraire, ce point d'articulation sera déporté vers l'intérieur par rapport au milieu des bascules.

Le principe décrit en détail en référence à la construction de roues jumelées peut bien entendu s'appliquer également à des structures de roues comportant plus de deux roues. La fig. 7 illustre à titre d'exemple une réalisation comportant trois roues indépendantes couplées entre elles au moyen de bascules, et la fig. 8 illustre une réalisation comportant quatre roues indépendantes couplées entre elles au moyen de bascules.

En référence à la fig. 7, la structure représentée comporte trois roues indépendantes 50, 51 et 52. Les roues 50 et 51 sont avantageusement couplées entre elles par quatre bascules 53 qui sont diamétralement opposées deux à deux. Les roues 51 et 52 sont également couplées entre elles par quatre bascules 54 identiques aux bascules 53. Les bascules 53 et les bascules 54 sont respectivement couplées entre elles par quatre bascules 55 qui sont fixées à deux bras de suspension 56. Le montage des différentes bascules est identique à celui des bascules 12 décrites précédemment.

Dans le cas de la fig. 8, la structure comporte quatre roues indépendantes 60, 61, 62 et 63. Les roues indépendantes 60 et 61 sont couplées entre elles par quatre bascules 64. Les roues indépendantes 62 et 63 sont couplées entre elles par quatre bascules 65. Les bascules 64 et 65 sont respectivement couplées entre elles par quatre bascules 66 qui sont fixées deux à deux à deux bras de suspension 67. Une telle structure peut être généralisée à un nombre supérieur de roues, ce qui peut présenter un avantage pour des véhicules spéciaux, en particulier des véhicules tout-terrain ou des véhicules destinés à traverser des surfaces marécageuses où un véhicule classique à quatre roues motrices ne présente pas une surface d'appui suffisante pour éviter de s'enfoncer dans le terrain.

Pour des roues motrices, l'une des roues jumelées est couplée au moyen de trois biellettes au mécanisme d'entraînement du véhicule.

Dans tous les cas, le système de plage à bascule permet une adhérence optimale des pneumatiques sur la surface d'appui quelles que soient la nature de ce revêtement et les charges supportées par le véhicule.

## Revendications

1. Structure à roues indépendantes multiples pour véhicule motorisé ou tracté destiné à se déplacer sur une surface d'appui irrégulière, caractérisée en ce que chaque roue comporte une partie centrale (13) liée à la structure de base du véhicule et une partie périphérique (14) concentrique par rapport à ladite partie centrale et agencée pour tourner autour de cette dernière, dans laquelle ladite partie centrale et ladite partie périphérique sont couplées entre elles par au moins un roulement (15) comprenant au moins un élément annulaire intérieur (16) solidaire de ladite partie centrale et au moins un élément annulaire extérieur (17) concentrique audit élément annulaire intérieur et solidaire de ladite partie périphérique, cette dernière portant un pneumatique adapté à la nature de la surface d'appui sur laquelle se déplace le véhicule, et dans laquelle ladite partie centrale est liée à la structure de base du véhicule en des points d'ancrage décentrés de la roue, ces roues indépendantes (10, 11; 50, 51, 52) étant reliées deux à deux par deux bascules (12) diamétralement opposées, ces bascules étant articulées à une de leurs extrémités en un point d'ancrage (18) décentré d'une des roues indépendantes et à leur autre extrémité en un point d'ancrage (19) décentré d'une autre de ces roues indépendantes, et les dites bascules étant fixées au moyen d'organes de pivotement (21) , soit directement, soit par l'intermédiaire de bascules à deux bras de couplage (20) solidaires de la structure de base du véhicule.

2. Structure selon la revendication 1, caractérisée en ce que lesdits bras de couplage (20) constituent des bras de suspension (40; 56, 67) du véhicule.

3. Structure selon la revendication 1, caractérisée en ce que lesdits organes de pivotement (21) sont équidistants desdits points d'ancrage (18, 19) décentrés des roues indépendantes.

4. Structure selon la revendication 1, caractérisée en ce que lesdits organes de pivotement (21) sont décalés par rapport au milieu de la bascule (12).

5. Structure selon la revendication 1, caractérisée en ce que les éléments annulaires extérieurs (17) des roulements (15) des roues jumelées sont couplés entre eux au moyen d'une biellette (24) dont les extrémités sont respectivement articulées audit élément annulaire extérieur (17) associé à l'une des roues et audit élément annulaire extérieur (17) associé à l'autre roue.

6. Structure selon l'une quelconque des revendications précédentes, caractérisée en ce que l'élément annulaire extérieur de l'une des roues indépendantes est couplé à un mécanisme d'entraînement au moyen de trois biellettes (24) fixées par une de leurs extrémités en trois points dudit élément annulaire extérieur.

## Patentansprüche

1. Aufbau mit unabhängigen Mehrfachrädern für motorgetriebene oder gezogene Fahrzeuge, die sich auf einer unregelmäßigen Fahrbahn bewegen,
**dadurch gekennzeichnet,** daß
jedes Rad eine mit dem Unterbau des Fahrzeugs verbundene zentrale Partie (13) aufweist und eine bezüglich der zentralen Partie konzentrische periphere Partie (14), die so gestaltet ist, daß sie sich um diese letztere dreht, wobei die zentrale Partie und die periphere Partie miteinander über mindestens ein Wälzlager (15) verbunden sind, welches mindestens ein mit der zentralen Partie fest verbundenes ringförmiges inneres Element (16) und mindestens ein ringförmiges äußeres Element (17) aufweist, das zu dem inneren ringförmigen Element konzentrisch und fest mit der peripheren Partie verbunden ist, wobei diese letztere einen an die Art der Laufbahn, auf der sich das Fahrzeug bewegt, angepaßten Luftreifen trägt und bei welcher die zentrale Partie mit dem Unterbau des Fahrzeuges an Aufhängepunkten verbunden ist, die seitlich des Rades liegen, wobei diese unabhängigen Räder (10,11;50, 51,52) paarweise über zwei, diametral gegenüberliegende Wippen (12) verbunden sind, und diese Wippen mit einem ihrer Enden gelenkig an einem Aufhängungspunkt (18) angelenkt sind, der exzentrisch zu einem der unabhängigen Räder liegt und mit ihrem anderen Ende an einem Aufhängungspunkt (19), der exzentrisch zu einem anderen dieser unabhängigen Räder liegt und wobei diese Wippen mittels Schwenkelementen (21) entweder direkt oder mit Hilfe von Wippen an zwei fest mit dem Unterbau des Fahrzeugs verbundenen Koppelungsarmen (20) befestigt sind.

2. Aufbau nach Anspruch 1,
**dadurch gekennzeichnet,** daß
die Koppelungsarme (20) die Aufhängungsarme (40;56, 67) des Fahrzeuges bilden.

3. Aufbau nach Anspruch 1,
**dadurch gekennzeichnet,** daß
die Schwenkelemente (21) einen gleichen Abstand zu den Aufhängungspunkten (18,19) haben, die exzentrisch zu den unabhängigen Rädern liegen.

4. Aufbau nach Anspruch 1,
**dadurch gekennzeichnet,** daß
die Schwenkelemente (21) in Bezug auf die Mitte der Wippe (12) versetzt sind.

5. Aufbau nach Anspruch 1,
**dadurch gekennzeichnet,** daß
die ringförmigen äußeren Elemente (17) der Wälzlager (15) der Zwillingsräder miteinander mittels eines Schwingarmes (24) gekoppelt sind, dessen Enden jeweils an dem äußeren ringförmigen Element (17) des einen Rades und an dem äußeren ringförmigen Element (17) des anderen Rades angelenkt sind.

6. Aufbau nach einem beliebigen der vorhergehenden Ansprüche,
**dadurch gekennzeichnet,** daß
das äußere ringförmige Element eines der unabhängigen Räder an einen Antriebsmechanismus gekoppelt ist, und zwar mittels dreier Schwingarme (24), die mit einem ihrer Enden an zwei Punkten des äußeren ringförmigen Elementes befestigt sind.

## Claims

1. A structure with multiple independent wheels for a motorized or engine driven vehicle designed to move on an irregular surface, characterized in that each wheel comprises a central portion (13) connected to the base structure of the vehicle and a peripheral portion (14) concentric with respect to the said central portion and disposed to rotate about the latter, wherein the said central portion and the said peripheral portion are connected to each other by at least one bearing (15) comprising at least one interior annular element (16) connected to the said central portion and at least one exterior annular element (17) concentric to the said interior annular element and connected to the said peripheral portion, said latter portion having a tire appropriate for the type of surface on which the vehicle will travel, and wherein said central portion is connected to the base structure of the vehicle at anchor points which are off-center from the wheel, these independent wheels (10, 11; 50, 51, 52) being connected two by two by two diametrically opposed rocker arms (12), said rocker arms being articulated at one extremity of an off-center anchoring point (18) on one of the independent wheels and at its other extremity to an off-center anchoring point (19) of another of said independent wheels, and the said rocker arms being affixed by means of pivoting elements (21), either directly or by means of rocker arms with two coupling arms (20) connected to the base structure of the vehicle.

2. A structure according to claim 1, characterized in that the said coupling arms (20) comprise the suspension arms (40; 56, 67) of the vehicle.

3. A structure according to claim 1, characterized in that the said pivoting elements (21) are equidistant from the said off-center anchoring points (18, 19) on the independent wheels.

4. A structure according to claim 1, characterized in that the said pivoting elements (21) are widely spaced apart from the center of the rocker arm (12).

5. A structure according to claim 1, characterized in that the exterior annular element (17) of bearings (15) of the dual wheels are connected to each other by means of a small connecting rod (24), the extremities of which are respectively articulated to the said exterior annular element (17) associated with one of the wheels and with the said exterior annular element ((17) associated with the other wheel.

6. A structure according to any one of the preceding claims, characterized in that the exterior annular element of one of the independent wheels is connected to a drive mechanism by means of three small connecting rods (24) attached at one extremity to three points on the said exterior annular element.
